# EUROPEAN PATENT SPECIFICATION

(11) **EP 4 628 750 B1**
(45) Date of publication and mention of the grant of the patent: **16.09.2026**
(21) Application number: 24212574.8
(22) Date of filing: 13.11.2024
(51) Int. Cl.: F16H 9/18, F16H 55/56, F16H 57/021, F16H 63/06

(54) **CONTINUOUSLY VARIABLE TRANSMISSION AND STRADDLED VEHICLE INCLUDING CONTINUOUSLY VARIABLE TRANSMISSION**
STUFENLOSES GETRIEBE UND GRÄTSCHSITZFAHRZEUG MIT STUFENLOSEM GETRIEBE
TRANSMISSION À VARIATION CONTINUE ET VÉHICULE À ENFOURCHER COMPRENANT UNE TRANSMISSION À VARIATION CONTINUE

(30) Priority: 04.04.2024 JP 2024061073
(43) Date of publication of application: 08.10.2025
(73) Proprietor: Yamaha Hatsudoki Kabushiki Kaisha, Iwata-shi, Shizuoka 438-8501 (JP)
(72) Inventor: FUJIKURA, Kyohei, Iwata-shi, 4388501 (JP); TANAKA, Ippei, Iwata-shi, 4388501 (JP)
(74) Representative: Studio Torta S.p.A.

(56) References cited:
- EP-A1- 1 614 939
- BR-A2- PI0 803 891
- CN-C- 100 526 685

## Description

### BACKGROUND

### Technical Field

The present invention relates to a continuously variable transmission and a saddle-straddled vehicle including a continuously variable transmission.

### Background

The patent literature 1 discloses a supporting structure for a continuously variable transmission. The supporting structure supports a shaft by a bearing. In this supporting structure, an annular member is disposed on an outer peripheral surface of a tip portion of the shaft. The bearing is disposed on an outer peripheral surface of the annular member. A grease groove is formed on the outer peripheral surface of the annular member. The grease is disposed in the grease groove.

Patent Literature 1; Japanese Laid-open Patent Application No. 2009-68693

In a conventional supporting structure, the grease groove is formed on the outer peripheral surface of the annular member in order to reduce a sliding resistance between the bearing and the annular member. In this case, since it is necessary to process the outer peripheral surface of the annular member, there is a problem that the manufacturability of the supporting structure is reduced. In addition, since it is necessary to place grease in the grease groove when assembling the supporting structure, an assemblability of the supporting structure is reduced.
EP-A-1614939 discloses a continuously variable transmission according to the preamble of claim 1.

An object of the present invention is to provide a continuously variable transmission and a straddled vehicle including a continuously variable transmission which can improve a manufacturability of a supporting structure and an assemblability of the supporting structure.

### Description of the invention

A continuously variable transmission according to the present invention transmits driving force from an engine to a wheel. The continuously variable transmission includes the features of claim 1.

In the continuously variable transmission, the tip portion of the shaft member is supported by the first bearing via the diameter expansion member. In other words, a shaft diameter of the tip portion of the shaft member can be increased by the diameter expansion member. Therefore, in the continuously variable transmission, a surface pressure resistance of a supported surface, which is supported by the first bearing, can be improved in comparison with a case in which the first bearing directly supports the tip portion of the shaft member.

In addition, in the continuously variable transmission, the impregnated bush is disposed between the diameter expansion member and the first bearing. With this configuration, the sliding resistance between the first bearing and the diameter expansion member can be reduced without processing the diameter expansion member. In other words, in the continuously variable transmission, a manufacturability of the supporting structure and an assemblability of the supporting structure can be improved.

The continuously variable transmission can be configured as follows. The diameter expanding member is mounted to the outer peripheral surface of the tip portion of the shaft member. With this configuration, the tip portion of the shaft member can be supported by the first bearing via the diameter expansion member and the impregnated bush.

The continuously variable transmission can be configured as follows. The impregnated bush is mounted to an inner peripheral surface of the first bearing. With this configuration, the impregnated bush can be easily disposed between the first bearing and the diameter expansion member.

The continuously variable transmission can be configured as follows. The shaft member includes a shaft body and the tip portion extending from the shaft body in an axial direction with respect to the rotational center axis. An outer diameter of the tip portion is smaller than an outer diameter of the shaft body. With this configuration, the diameter expansion member can be easily disposed on the tip portion of the shaft member.

The continuously variable transmission can further include a second bearing disposed on the outer peripheral surface of the tip portion of the shaft member. The diameter expanding member is disposed on an outer peripheral surface of a tip side of the tip portion of the shaft member. The second bearing is disposed on an outer peripheral surface of a base end side of the tip portion of the shaft member. An inner diameter of the first bearing is larger than an inner diameter of the second bearing.

In this case, the diameter expansion member is disposed on the tip side than the second bearing. Specifically, since the impregnated bush is disposed radially outward from the diameter expansion member. The first bearing is disposed radially outward from the diameter expansion member, the first bearing, the impregnated bush and the diameter expansion member are disposed on the tip side than the second bearing. In this state, the inner diameter of the first bearing is larger than the inner diameter of the second bearing. With this configuration, the tip portion of the shaft member can be stably supported by the first bearing.

The continuously variable transmission can be configured as follows. The tip portion includes a first tip portion which forms the outer peripheral surface of the tip side and a second tip portion which forms the outer peripheral surface on the base end side. An outer diameter of the first tip portion is smaller than an outer diameter of the second tip portion.

In this case, the first bearing is disposed on the first tip portion via the diameter expansion member and the impregnated bush. The second bearing is disposed on the second tip portion. In this state, the outer diameter of the first tip portion is smaller than the outer diameter of the second tip portion. With this configuration, after the second bearing is disposed on the second tip portion, the diameter expansion member, the impregnated bush and the first bearing can be easily disposed on the first tip portion.

The continuously variable transmission can be configured as follows. An inner diameter of the impregnated bush is larger than the inner diameter of the second bearing. With this configuration, the sliding resistance between the first bearing and the diameter expansion member is suitably reduced.

The continuously variable transmission can be configured as follows. A positioning member, which positions the diameter expansion member with respect to the second bearing, is disposed between the diameter expansion member and the second bearing in an axial direction with respect to the rotational center axis. With this configuration, a position of the expanding diameter member with respect to the second bearing can be stably maintained by the positioning member.

A straddled vehicle according to one aspect of the present invention includes an engine, a wheel, and a continuously variable transmission. The engine includes a crankshaft. The continuously variable transmission transmits driving force from the engine to the wheel.

The continuously variable transmission includes a primary pulley, a secondary pulley, a belt, a case and a supporting structure. The primary pulley is connected to the crankshaft. The secondary pulley is connected to the wheel, and a belt is wound around the primary pulley and secondary pulley. The case covers the primary pulley, the secondary pulley and the belt. The supporting structure is provided between the case and at least one of the primary pulley and the secondary pulley.

The supporting structure includes a shaft member, an diameter expansion member, a first bearing and an impregnated bush. The shaft member includes a rotational center axis. The diameter expansion member is disposed on an outer peripheral surface of a tip portion of the shaft member. The first bearing is mounted to the case. The first bearing is disposed at an interval from the diameter expansion member in a radial direction with respect to the rotational center axis. The impregnated bush is disposed between the diameter expansion member and the first bearing in the radial direction.

In the straddled vehicle, the impregnated bush is disposed between the diameter expansion member and the first bearing in the supporting structure of the continuously variable transmission. With this configuration, the sliding resistance between the first bearing and the diameter expansion member can be reduced without processing the diameter expansion member. In other words, in the straddled vehicle, a manufacturability of the supporting structure and an assemblability of the supporting structure can be improved.

According to the present invention, in a continuously variable transmission and a saddle-straddled vehicle including a continuously variable transmission, a manufacturability of a supporting structure and an assemblability of the supporting structure can be improved.

### Brief description of the drawings

FIG. 1 is a left side view of a straddled vehicle.
FIG. 2 is a cross-sectional top view of an engine unit.
FIG. 3 is an enlarged view of a primary pulley and a sheave drive mechanism.
FIG. 4 is an enlarged view of the primary pulley and the sheave drive mechanism.
FIG. 5 is an enlarged view of a secondary pulley and a centrifugal clutch.
FIG. 6 is an enlarged view of the secondary pulley and the centrifugal clutch.
FIG. 7 is an enlarged view of a supporting structure.
FIG. 8 is an exploded perspective view of the supporting structure.

### Embodiments of the invention

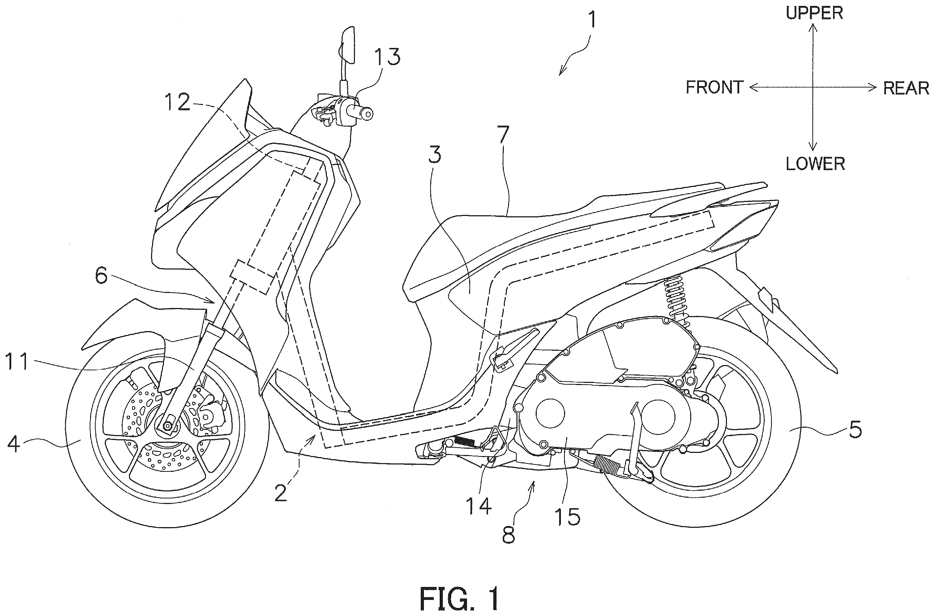

A straddled vehicle according to a preferred embodiment will be explained with reference to drawings. FIG. 1 is a left side view of the straddled vehicle 1 according to the preferred embodiment. The straddled vehicle 1 according to the present embodiment is a scooter. As shown in FIG. 1, the straddled vehicle 1 includes a vehicle body frame 2, a vehicle body cover 3, a front wheel 4, a rear wheel 5 (an example of a wheel), a steering device 6, a seat 7, and an engine unit 8. In this embodiment, each of a front-rear direction and a left-right direction corresponds to a front-rear direction and a left-right direction as seen by a rider seated on the seat 7.

The vehicle body cover 3 covers the vehicle body frame 2. The front wheel 4 is mounted to a front fork 11. The rear wheel 5 is mounted to the engine unit 8. The steering device 6 is supported by the vehicle body frame 2 so as to be rotatable left and right. The steering device 6 includes the front fork 11, a steering shaft 12 and a handle member 13.

The front fork 11 rotatablly supports the front wheel 4. The steering shaft 12 is connected to the front fork 11. The steering shaft 12 is supported by the vehicle body frame 2 so as to be rotatable left and right. The handle member 13 is connected to the steering shaft 12. The seat 7 is disposed behind the handle member 13.

The engine unit 8 is disposed below the seat 7. The engine unit 8 is supported by the vehicle body frame 2 so as to be swingable up and down. The rear wheel 5 is rotatably supported by the engine unit 8. The engine unit 8 includes an engine 14 and a continuously variable transmission 15. The continuously variable transmission 15 is disposed on the side of the engine 14. The continuously variable transmission 15 transmits driving force from the engine 14 to the rear wheel 5.

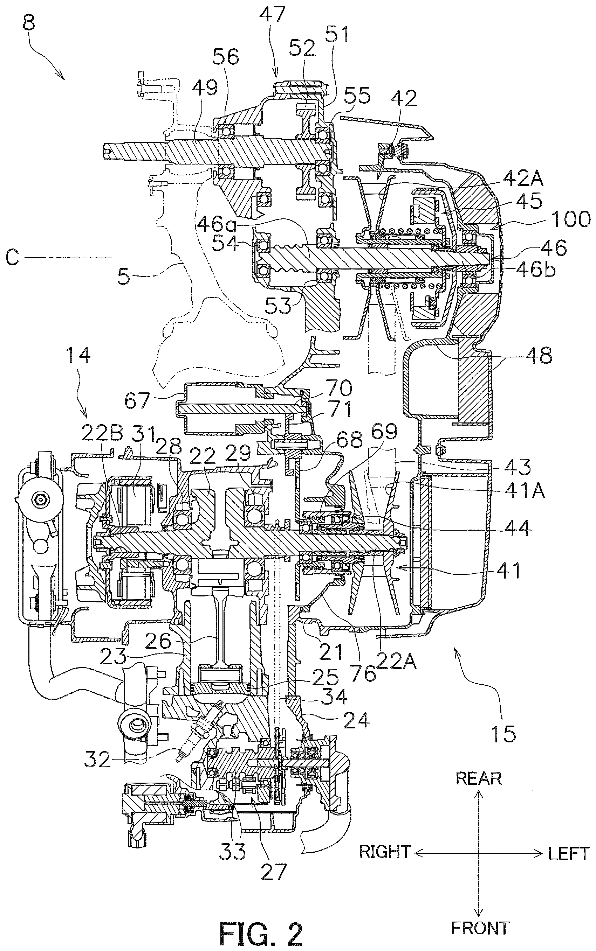

FIG. 2 is a cross-sectional top view of the engine unit 8. As shown in FIG. 2, the engine 14 includes a crankcase 21, a crankshaft 22, a cylinder body 23, a cylinder head 24, a piston 25, a connecting rod 26, and a valve actuating mechanism 27.

The crankshaft 22 is accommodated in the crankcase 21. The crankshaft 22 is rotatably supported by the crankcase 21 via bearings 28, 29. The crankshaft 22 includes a first shaft end 22A and a second shaft end 22B. The continuously variable transmission 15 is connected to the first shaft end 22A. An electric power generator 31 is connected to the second shaft end 22B.

The cylinder body 23 is connected to the crankcase 21. The cylinder head 24 is connected to the cylinder body 23. The connecting rod 26 and the piston 25 are disposed in the cylinder body 23. The piston 25 is connected to the crankshaft 22 via the connecting rod 26. An ignition device 32 is mounted to the cylinder head 24.

The valve actuating mechanism 27 includes a camshaft 33. A cam chain 34 is wound around the camshaft 33 and the crankshaft 22. Rotation of the crankshaft 22 is transmitted to the camshaft 33 via the cam chain 34 and the camshaft 33 rotates. As a result, an intake valves and an exhaust valve (not shown) of the engine 14 are driven by the valve actuating mechanism 27.

The continuously variable transmission 15 shown in FIG. 2 is an electronically controlled transmission. In other words, the continuously variable transmission 15 is electrically controlled to change a gear ratio in accordance with a command signal transmitted from a controller (not shown).

As shown in FIG. 2, the continuously variable transmission 15 includes a primary pulley 41, a secondary pulley 42, a belt 43, a sheave drive mechanism 44, a centrifugal clutch 45, an output shaft 46 (an example of a shaft member), a reducer 47, and a transmission case 48 (an example of a case).

The primary pulley 41 is connected to the engine 14. Specifically, the primary pulley 41 is connected to the crankshaft 22. The primary pulley 41 includes a first groove 41A which is formed in a V-shape. The secondary pulley 42 is connected to the rear wheel 5 via an axle 49. Specifically, the secondary pulley 42 is connected to the rear wheel 5 via the output shaft 46, the reducer 47, and the axle 49. The secondary pulley 42 includes a second groove 42A which is formed in a V-shape.

The belt 43 is wound around the primary pulley 41 and the secondary pulley 42. The belt 43 has a trapezoidal cross section which corresponds to the shapes of the first groove 41A and the second groove 42A. The secondary pulley 42 is connected to the output shaft 46 via the centrifugal clutch 45.

The output shaft 46 is rotatably supported by a reducer case 51 via bearings 53, 54. The output shaft 46 is connected to the axle 49 via the reducer 47. The axle 49 is rotatably supported by the reducer case 51 via bearings 55, 56.

The reducer 47 includes the reducer case 51 and a gear 52. The reducer case 51 accommodates the gear 52. The gear 52 transmits the rotation of the output shaft 46 to the axle 49. In FIG. 2, only the gear 52 in the multiple gears of the reducer 47 is shown and the other gears are omitted.

The transmission case 48 covers the primary pulley 41, the secondary pulley 42, the belt 43, the centrifugal clutch 45 and the output shaft 46 from the outside in the axial direction. The transmission case 48 is mounted to the reducer case 51 and the crankcase 21.

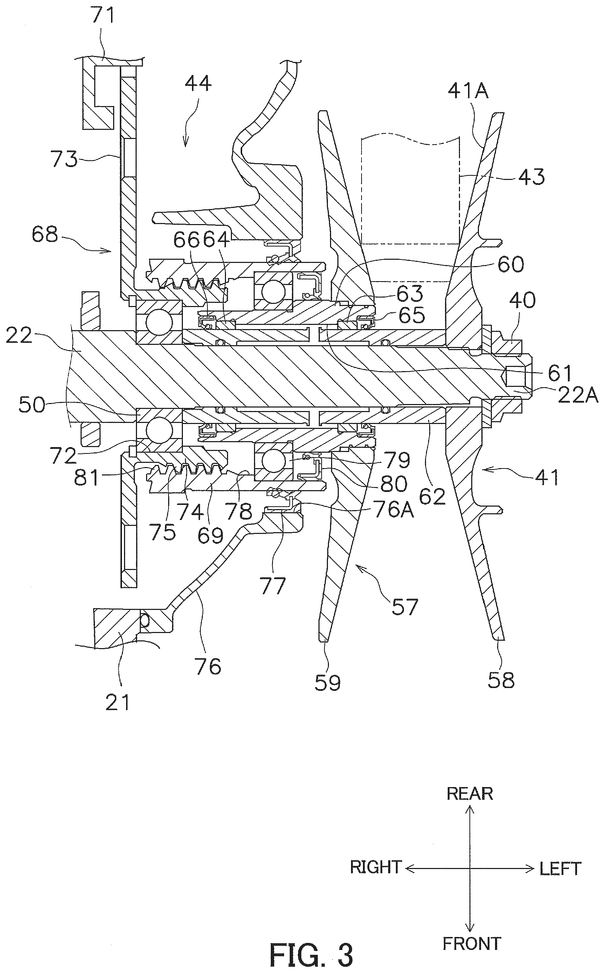

FIG. 3 is an enlarged view of a primary pulley 41 and the sheave drive mechanism 44. As shown in FIG. 3, the primary pulley 41 includes a first movable sheave 57 and a first fixed sheave 58. The first movable sheave 57 is supported by the crankshaft 22 so as to be movable in an axial direction of the crankshaft 22. The first movable sheave 57 is disposed axially inwardly (on a left side in FIG. 3) with respect to the first fixed sheave 58.

The first movable sheave 57 is supported by the crankshaft 22 so as to be non-rotatable in a circumferential direction of the crankshaft 22. The first movable sheave 57 is fixed to the crankshaft 22 so as to rotate integrally with the crankshaft 22.

The first movable sheave 57 includes a first sheave portion 59 and a first boss portion 60. The first sheave portion 59 is disposed on an opposite side of the first fixed sheave 58 in the axial direction of the crankshaft 22. The first groove 41A is provided between the first sheave portion 59 and the first fixed sheave 58.

The first boss portion 60 extends from the first sheave portion 59 in the axial direction of the crankshaft 22. The first boss portion 60 includes a first boss hole 61. The first boss hole 61 extends so as to pass through the first boss portion 60 in the axial direction of the crankshaft 22. The crankshaft 22 is inserted into the first boss hole 61.

The crankshaft 22 includes an outer shaft 62. The outer shaft 62 is mounted to an outer peripheral surface of the first shaft end 22A of the crankshaft 22. The above-mentioned first movable sheave 57 is fixed to the outer shaft 62 with a spline engagement. The outer shaft 62 is disposed in the first boss hole 61.

A first bush 63 and a second bush 64 are press-fitted into the first boss hole 61. The first bush 63 and the second bush 64 are disposed between the first boss hole 61 and an outer peripheral surface of the outer shaft 62. The first bush 63 and the second bush 64 are made of a sliding material.

As the first movable sheave 57 moves in the axial direction of the crankshaft 22, the first bush 63 and the second bush 64 slide in the axial direction with respect to the outer shaft 62. The first boss hole 61 is filled with lubricant such as grease. Oil seals 65, 66 seal between the first boss portion 60 and the outer shaft 62.

The first fixed sheave 58 is fixed to the crankshaft 22. The first fixed sheave 58 is fixed to the crankshaft 22 by a nut 40. The first fixed sheave 58 is fixed to the crankshaft 22 so as to be immovable in the axial direction. The first fixed sheave 58 is fixed to the crankshaft 22 so as to rotate integrally with the crankshaft 22.

The sheave drive mechanism 44 moves the first movable sheave 57 in the axial direction. As shown in FIG. 2, the sheave drive mechanism 44 includes an electric actuator 67, a first drive member 68, and a second drive member 69.

The electric actuator 67 is, for example, an electric motor. The electric actuator 67 may be an actuator other than the electric motor. The electric actuator 67 includes a rotating shaft 70. The rotating shaft 70 is connected to the first drive member 68 via a gear 71. Rotation of the rotating shaft 70 is transmitted to the first drive member 68 via the gear 71.

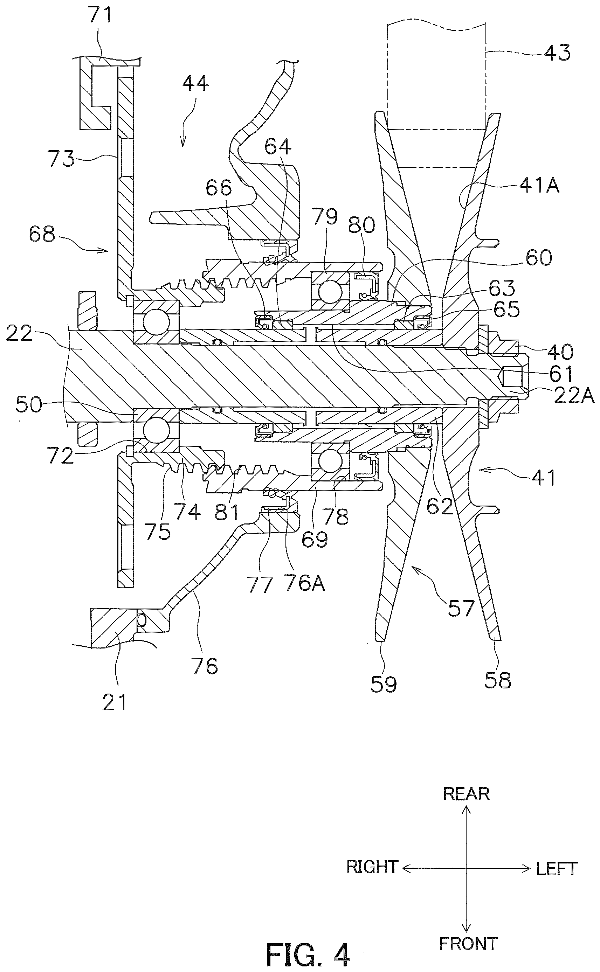

As shown in FIGS. 3 and 4, the first drive member 68 includes a first hole 72. The first hole 72 extends so as to pass through the first drive member 68 in the axial direction of the crankshaft 22. The crankshaft 22 is inserted through the first hole 72. The first drive member 68 is rotatably supported by the crankshaft 22 via a bearing 50. The first drive member 68 is supported so as to be immovable with respect to the crankshaft 22 in the axial direction of the crankshaft 22.

The first drive member 68 includes a gear portion 73 and a feed screw portion 74. The gear portion 73 extends from the feed screw portion 74 in the radial direction of the crankshaft 22. The gear portion 73 meshes with the gear 71. The rotation of the rotating shaft 70 of the electric actuator 67 is transmitted to the gear portion 73 via a gear 71 and the first drive member 68 rotates. The feed screw portion 74 extends from the gear portion 73 in the axial direction of the crankshaft 22. A first screw 75 is provided on an outer peripheral surface of the feed screw portion 74.

A crankcase cover 76 is mounted to the crankcase 21. The crankcase cover 76 includes an opening 76A. The opening 76A opens on the primary pulley 41 side. The second drive member 69 is inserted through the opening 76A of the crankcase 21. An oil seal 77 seals between the second drive member 69 and the crankcase cover 76.

The second drive member 69 includes a second hole 78. The second hole 78 extends so as to penetrate the second drive member 69 in the axial direction of the crankshaft 22. The crankshaft 22 and the first boss portion 60 are inserted through the second hole 78.

The second drive member 69 is rotatably supported by the first boss portion 60. The second drive member 69 is supported by the first boss portion 60 via a bearing 79. The second drive member 69 is supported by the first boss portion 60 so as to be immovable in the axial direction. The second drive member 69 moves with the first movable sheave 57 in the axial direction. An oil seal 80 seals between the second drive member 69 and the first boss portion 60.

A second screw 81 is provided on an inner peripheral surface of the second drive member 69. The second screw 81 meshes with the first screw 75 of the first drive member 68. As the first drive member 68 rotates, the second drive member 69 moves in the axial direction as shown in FIG and the first movable sheave 57 moves in the axial direction.

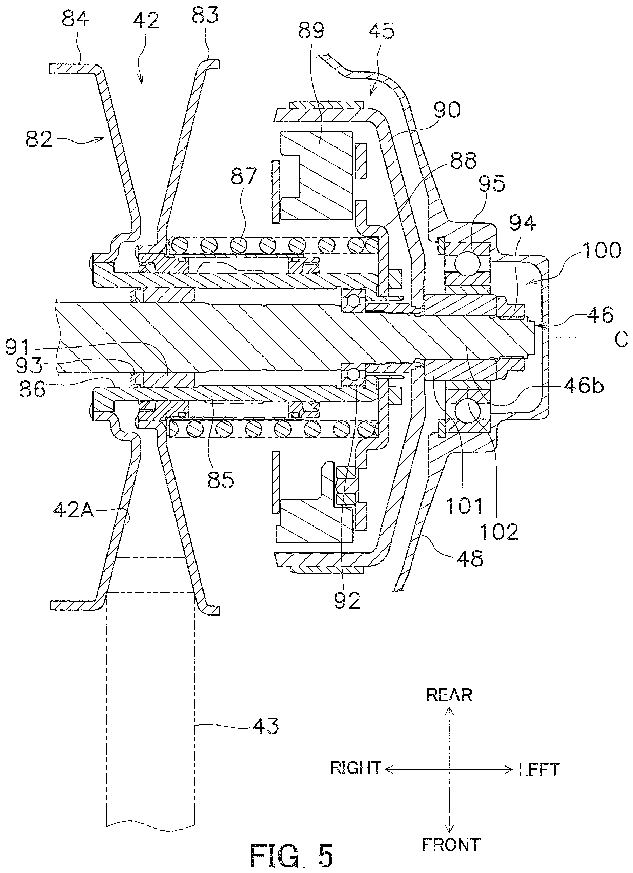

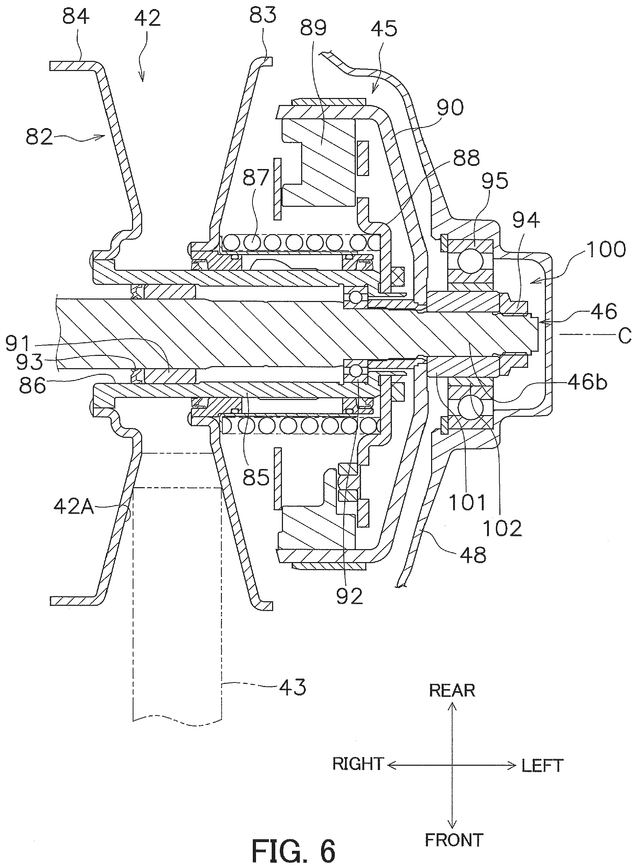

FIGS. 5 and 6 are an enlarged view of the secondary pulley 42 and the centrifugal clutch 45. As shown in FIGS. 5 and 6, the secondary pulley 42 includes a second fixed sheave 82 and a second movable sheave 83. The second fixed sheave 82 is rotatably supported by the output shaft 46. The second fixed sheave 82 is supported on the output shaft 46 so as to be immovable in the axial direction.

The second fixed sheave 82 is disposed so as to face the second movable sheave 83 in an axial direction of the output shaft 46. The second fixed sheave 82 includes a second sheave portion 84 and a second boss portion 85. The second groove 42A is provided between the second sheave portion 84 and the second movable sheave 83.

The second boss portion 85 extends from the second sheave portion 84 in the axial direction of the output shaft 46. The second boss portion 85 includes a second boss hole 86. The second boss hole 86 extends so as to penetrate the second boss portion 85 in the axial direction of the output shaft 46. The output shaft 46 is inserted into the second boss hole 86.

As shown in FIGS. 5 and 6, the output shaft 46 is rotatably supported by the transmission case 48 via a bearing 95. A bush 91 is press-fitted into the second boss hole 86. The bush 91 is made of a sliding material. The bush 91 is disposed between the second boss hole 86 and an outer peripheral surface of the output shaft 46. The output shaft 46 and the bearing 95 configures a supporting structure 100 which will be described later.

A bearing 92 (an example of a second bearing) is disposed in the second boss hole 86. The bearing 92 is disposed on the outer peripheral surface of a tip portion of the output shaft 46. Specifically, the bearing 92 is disposed on the outer peripheral surface on a base end side of the tip portion of the output shaft 46.

The second boss portion 85 is rotatably supported by the bush 91 and the bearing 92 with respect to the output shaft 46. The bush 91 and the bearing 92 support the second fixed sheave 82. The bush 91 and the bearing 92 support the second movable sheave 83 via the second boss portion 85. The second boss hole 86 is filled with lubricant such as grease. An oil seal 93 seals between the second boss portion 85 and the output shaft 46.

As shown in FIGS. 5 and 6, the second movable sheave 83 is disposed so as to face the second fixed sheave 82 in the axial direction. The second movable sheave 83 is disposed axially outwardly (on a right side in FIGS. 5 and 6) with respect to the second fixed sheave 82.

The second movable sheave 83 is configured to rotate around a rotational center axis C. Specifically, the second movable sheave 83 is supported non-rotatably with respect to the second boss portion 85. The second movable sheave 83 rotates integrally with the second sheave portion 84 via the second boss portion 85. In other words, the second movable sheave 83 rotates integrally with the second fixed sheave 82.

The second movable sheave 83 is configured to move with respect to the second fixed sheave 82 in the axial direction. Specifically, the second movable sheave 83 is configured to move with respect to the second sheave portion 84 in the axial direction. More specifically, the second movable sheave 83 is supported by the second boss portion 85 so as to be movable in the axial direction.

In this embodiment, the second movable sheave 83 is fixed to the second boss portion 85 with a spline engagement. A spring 87 is disposed between the second movable sheave 83 and the centrifugal clutch 45. The spring 87 urges the second movable sheave 83 toward the second fixed sheave 82.

As shown in FIG. 5, in case that the vehicle speed is lower than a predetermined connecting speed, the centrifugal clutch 45 is in a disengaged state where the continuously variable transmission 15 is disconnected from the rear wheel 5. As shown in FIG. 6, the centrifugal clutch 45 is in an engaged state where the continuously variable transmission 15 is connected to the rear wheel 5 in case that the vehicle speed is equal to or higher than the connecting speed.

As shown in FIGS. 5 and 6, the centrifugal clutch 45 includes a drive plate 88, clutch shoes 89 and a clutch outer 90. The drive plate 88 is fixed to the second boss portion 85. The drive plate 88 rotates integrally with the second boss portion 85.

The clutch shoes 89 are connected to the drive plate 88. The clutch shoes 89 rotate integrally with the drive plate 88. The clutch shoes 89 are supported so as to be movable in a radial direction with respect to the drive plate 88. The clutch shoes 89 are urged radially inwardly by a clutch spring (not shown).

The clutch outer 90 covers the clutch shoes 89 in the radial direction. The clutch outer 90 is mounted to the output shaft 46 so as to rotate integrally with the output shaft 46. The clutch outer 90 is positioned on the output shaft 46 by a nut 94.

In case that the vehicle speed is slower than the predetermined connecting speed, the clutch shoes 89 move radially inwardly due to an urging force of the clutch spring and separates from the clutch outer 90. In this state, the centrifugal clutch 45 is in the disengaged state and the rotation of the secondary pulley 42 is not transmitted to the output shaft 46.

In case that the vehicle speed is equal to or greater than the coupling speed, the clutch shoes 89 move radially outwardly due to centrifugal force against the urging force of the clutch spring. As a result, the clutch shoes 89 contact with the clutch outer 90. In this state, the centrifugal clutch 45 is in the engaged state and the rotation of the secondary pulley 42 is transmitted to the output shaft 46 via the drive plate 88, the clutch shoes 89, and the clutch outer 90.

As shown in FIGS. 2, 5, and 6, the continuously variable transmission 15 further includes the supporting structure 100. The supporting structure 100 is provided between the transmission case 48 and at least one of the primary pulley 41 and the secondary pulley 42.

In the present embodiment, as shown in FIGS. 5 and 6, the supporting structure 100 is provided between the secondary pulley 42 and the transmission case 48. In case that a tip portion of the crankshaft 22 is supported by a case member, a supporting structure 100 may be provided between the primary pulley 41 and the case member.

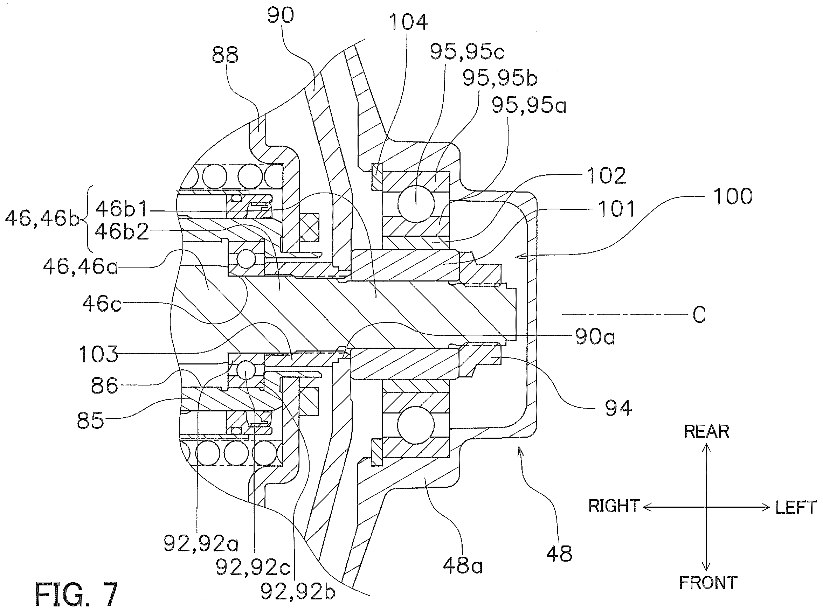

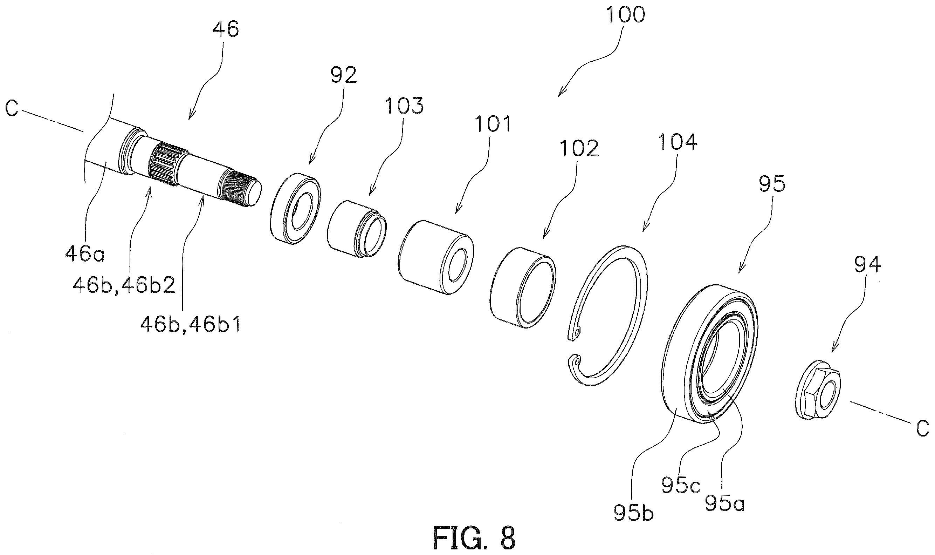

As shown in FIGS. 7 and 8, the supporting structure 100 includes the output shaft 46 described above, a diameter expansion member 101, the bearing 95 described above (an example of a first bearing), and an impregnated bush 102. In the following description, the axial direction of the output shaft 46 will be referred to as the "an axial direction", and the radial direction of the output shaft 46 will be referred to as the "a radial direction". The output shaft 46 includes a rotational center axis C. The axial direction is a direction in which the rotational center axis C extends. The radial direction is a direction perpendicular to the rotational center axis C of rotation and moving away from the rotational center axis C.

As shown in Figures 7 and 8, the output shaft 46 extends in the axial direction. The output shaft 46 is formed in a shaft shape. As shown in FIGS. 7 and 8, the output shaft 46 includes a shaft body 46a and a tip portion 46b.

As shown in FIG. 2, the shaft body 46a is rotatably supported by the reducer case 51 via the bearings 53, 54. As shown in FIGS. 5, 6 and 7, the tip portion 46b is rotatably supported by the transmission case 48 via the bearing 95.

As shown in Figures 7 and 8, the tip portion 46b extends from the shaft body 46a in the axial direction. An outer diameter of the tip portion 46b is smaller than an outer diameter of the shaft body 46a. As shown in FIG. 7, the tip portion 46b is inserted into a hole portion 90a of the clutch outer 90.

As shown in FIGS. 7 and 8, the tip portion 46b includes a first tip portion 46b1 and a second tip portion 46b2. The first tip portion 46b1 forms an outer peripheral surface on a tip side thereof. An outer diameter of the first tip portion 46b1 is smaller than an outer diameter of the shaft body 46a. The outer diameter of the first tip portion 46b1 is smaller than an outer diameter of the second tip portion 46b2.

The second tip portion 46b2 forms an outer peripheral surface on the base end side thereof. The second tip portion 46b2 is disposed between the shaft body 46a and the first tip portion 46b1 in the axial direction. The outer diameter of the second tip portion 46b2 is smaller than the outer diameter of the shaft body 46a. The outer diameter of the second tip portion 46b2 is larger than the outer diameter of the first tip portion 46b1.

As shown in FIG. 7, the bearing 92 is disposed on the outer peripheral surface of the second tip portion 46b2. The bearing 92 supports the second boss portion 85 rotatably with respect to the output shaft 46. Specifically, as shown in Figures 7 and 8, the bearing 92 includes an inner ring 92a, an outer ring 92b disposed radially outwardly than the inner ring 92a and a plurality of rolling elements 92c disposed between the inner ring 92a and the outer ring 92b.

As shown in FIG. 7, the inner ring 92a of the bearing 92 is mounted to the outer peripheral surface of the second tip portion 46b2. The outer ring 92b of the bearing 92 contacts with the second boss hole 86 of the second boss portion 85 so as to rotate integrally with the second boss portion 85. The inner ring 92a of the bearing 92 abuts against a step 46c which is formed between the shaft body 46a and the second tip portion 46b2 and an axial movement of the bearing 92 toward the engine 14 restricts.

The diameter expansion member 101 is used to expand an outer diameter of the output shaft 46. As shown in FIG. 8, the diameter expansion member 101 is formed in a cylindrical shape. The diameter expansion member 101 can be formed in a cylindrical shape which has a C-shaped cross section. As shown in FIG. 7, the diameter expansion member 101 is disposed on an outer peripheral surface of the tip portion 46b of the output shaft 46. Specifically, the diameter expansion member 101 is disposed on the outer peripheral surface on the tip side of the tip portion 46b.

In this embodiment, the diameter expansion member 101 is mounted to the outer peripheral surface of the first tip portion 46b1. In this state, an outer diameter of the diameter expansion member 101 is larger than the outer diameter of the shaft body 46a. The outer diameter of the diameter expansion member 101 is larger than an outer diameter of a positioning member 103 which will be described later. The diameter expansion member 101 abuts against an outer surface of the clutch outer 90 in the axial direction.

As shown in FIG. 7, the positioning member 103 is disposed between the diameter expansion member 101 and the bearing 92 in the axial direction. The positioning member 103 positions the diameter expansion member 101 with respect to the bearing 92 in the axial direction. As shown in FIG. 8, the positioning member 103 is formed in a cylindrical shape.

As shown in FIG. 7, the positioning member 103 is disposed on the outer peripheral surface of the tip portion 46b. Specifically, the positioning member 103 is disposed on the outer peripheral surface of the second tip portion 46b2. In this embodiment, the positioning member 103 engages with the second tip portion 46b2 by a spline engagement and rotates integrally with the output shaft 46.

The positioning member 103 is inserted into the hole portion 90a of the clutch outer 90 in a state where the positioning member 103 abuts against the inner surface of the clutch outer 90 in the axial direction. The positioning member 103 is disposed between the hole portion 90a of the clutch outer 90 and the outer peripheral surface of the tip portion 46b in the radial direction. In this embodiment, the positioning member 103 is disposed between the hole portion 90a of the clutch outer 90 and the second tip portion 46b2 in the radial direction.

The positioning member 103 and the diameter expansion member 101 hold the clutch outer 90 in the axial direction. Specifically, the bearing 92, the positioning member 103, the clutch outer 90 and the diameter expansion member 101 are held by the step 46c and the nut 94 in the axial direction. The bearing 92, the positioning member 103 and the nut 94 may be interpreted as elements included in the supporting structure 100.

As shown in FIG. 7, the bearing 95 rotatably supports the output shaft 46 with respect to the transmission case 48. The bearing 95 is mounted to the transmission case 48. Specifically, the bearing 95 is mounted to a bulge portion 48a of the transmission case 48.

Specifically, the outer ring 95b of the bearing 95 is mounted to the bulge portion 48a of the transmission case 48. The outer ring 95b of the bearing 95 is held by the bulge portion 48a and a retaining member 104. In this embodiment, as shown in FIG. 8, the retaining member 104 is a C-ring. The retaining member 104 may be interpreted as a element included in the supporting structure 100.

As shown in FIG. 7, the bearing 95 is disposed radially outwardly than the diameter expansion member 101. The bearing 95 is disposed at an interval from the diameter expansion member 101 in the radial direction. Specifically, the bearing 95 includes an inner ring 95a, an outer ring 95b disposed radially outwardly than the inner ring 95a and a plurality of rolling elements 95c disposed between the inner ring 95a and the outer ring 95b.

An inner peripheral surface of the inner ring 95a of the bearing 95 is disposed at an interval from an outer peripheral surface of the diameter expansion member 101 in the radial direction. An inner diameter of the inner ring 95a of the bearing 95 is larger than the inner diameter of the inner ring 92a of the bearing 92. The inner diameter of the inner ring 95a of the bearing 95 is larger than an outer diameter of the outer ring 92b of the bearing 92.

As shown in FIG. 8, the impregnated bush 102 is formed in an annular shape. As shown in FIG. 7, the impregnated bush 102 is mounted to the inner peripheral surface of the inner ring 95a of the bearing 95. The impregnated bush 102 is disposed between the inner peripheral surface of the inner ring 95a of the bearing 95 and the outer peripheral surface of the diameter expansion member 101 in the radial direction. The inner diameter of the impregnated bush 102 is larger than the inner diameter of the bearing 92.

In the continuously variable transmission 15 described above, in case that the vehicle speed is equal to or higher than the connecting speed, the centrifugal clutch 45 is in the engaged state as shown in FIG. 6. As a result, the rotation of the crankshaft 22 is transmitted to the rear wheel 5 via the primary pulley 41, the belt 43, the secondary pulley 42, the centrifugal clutch 45, the output shaft 46, the reducer 47 and the axle 49. This allows the straddled vehicle 1 to travel.

In addition, the gear ratio of the continuously variable transmission 15 is electrically controlled by moving the first movable sheave 57 with the sheave drive mechanism 44. The gear ratio of the continuously variable transmission 15 means the ratio of the rotation speed of the crankshaft 22 to the rotation speed of the output shaft 46.

Specifically, when the first drive member 68 is rotated in a certain direction by the electric actuator 67, the second drive member 69 moves axially outwardly as shown in FIG. 4. As a result, the first movable sheave 57 moves axially outwardly together with the second drive member 69. When the first movable sheave 57 moves axially outwardly, a width of the first groove 41A between the first movable sheave 57 and the first fixed sheave 58 becomes smaller.

As a result, the diameter of the portion of the belt 43 which is wound around the primary pulley 41 (hereinafter referred to as a first winding diameter) becomes large. When the first winding diameter becomes larger, the diameter of the portion of the belt 43 which is wound around the secondary pulley 42 (hereinafter referred to as a second winding diameter) becomes smaller. Therefore, the gear ratio becomes smaller. In this case, as shown in FIG. 6, the second movable sheave 83 moves axially outwardly against the urging force of the spring 87 and a width of the second groove 42A increases.

When the first drive member 68 is rotated in a reverse direction by the electric actuator 67, the second drive member 69 moves axially inwardly as shown in FIG. 3. As a result, the first movable sheave 57 moves axially inwardly together with the second drive member 69. When the first movable sheave 57 moves axially inwardly, the width of the first groove 41A between the first movable sheave 57 and the first fixed sheave 58 increases. Therefore, the first winding diameter becomes smaller. When the first winding diameter becomes smaller, the second winding diameter becomes larger, and the gear ratio becomes larger. In this case, as shown in FIG. 5, the second movable sheave 83 moves axially inwardly due to the urging force of the spring 87 and the width of the second groove 42A becomes smaller.

In the straddled vehicle 1 including the above-described configuration, in the continuously variable transmission 15, the tip portion 46b of the output shaft 46 is supported by the bearing 95 via the diameter expansion member 101. In other words, the shaft diameter of the tip portion 46b of the output shaft 46 can be increased by the diameter expansion member 101. Therefore, in the continuously variable transmission 15, a surface pressure resistance of the supported surface, which is supported by the bearing 95, can be improved in comparison with a case in which the bearing 95 directly supports the tip portion 46b of the output shaft 46.

In addition, in the continuously variable transmission 15, the impregnated bush 102 is disposed between the diameter expansion member 101 and the bearing 95. With this configuration, the sliding resistance between the bearing 95 and the diameter expansion member 101 can be reduced without processing the diameter expansion member 101. In other words, in the continuously variable transmission 15, a manufacturability of the supporting structure 100 and an assemblability of the supporting structure 100 can be improved.

The straddled vehicle 1 is not limited to the scooter, and alternatively, may be a vehicle of another type such as a street type, an off-road type, or a moped type. The configuration of the continuously variable transmission 15 is not limited to that in the preferred embodiment described above and may be changed. The process for controlling the gear ratio of the continuously variable transmission 15 is not limited to that in the preferred embodiment described above and may be changed.

According to the present invention, in a continuously variable transmission and a straddled vehicle including a continuously variable transmission, a manufacturability of a supporting structure and an assemblability of the supporting structure can be improved.

### Reference Signs List

5: a rear wheel, 14: an engine, 15: a continuously variable transmission, 22: a crankshaft, 41: a primary pulley, 42: a secondary pulley, 43: a belt, 46: an output shaft, 46a: a shaft body of an output shaft, 46b: a tip portion of an output shaft, 46b1: a first tip portion of an output shaft, 46b2: a second tip portion of an output shaft, 48: a transmission case, 92: a bearing, 95: a bearing, 100: a supporting structure, 101: a diameter expansion member, 102: an impregnated bush, 103: a positioning member, C: a rotational center axis.

## Claims

1. A continuously variable transmission (15) transmitting driving force from an engine (14) to a wheel (5) comprising:
a primary pulley (41) connected to the engine (14);
a secondary pulley (42) connected to the wheel (5);
a belt (43) wound around the primary pulley (41) and the secondary pulley (42);
a case (48) covering the primary pulley (41), the secondary pulley (42) and the belt (43); and
a supporting structure (100) provided between the case (48) and at least one of the primary pulley (41) and the secondary pulley (42);
the supporting structure (100) including:
a shaft member (46) including a rotational center axis (C);
an diameter expansion member (101) disposed on an outer peripheral surface of a tip portion (46b) of the shaft member (46); and
a first bearing (95) mounted to the case (48) and disposed at an interval from the diameter expansion member (101) in a radial direction with respect to the rotational center axis (C);
**characterized by** comprising an impregnated bush (102) disposed between the diameter expansion member (101) and the first bearing (95) in the radial direction.

2. The continuously variable transmission according to claim 1, wherein
the diameter expansion member (101) is mounted to the outer peripheral surface of the tip portion (46b) of the shaft member (46).

3. The continuously variable transmission according to claim 1, wherein
the impregnated bush (102) is mounted to an inner peripheral surface of the first bearing (95).

4. The continuously variable transmission according to claim 1, wherein
the shaft member (46) includes a shaft body (46a) and the tip portion (46b) extending from the shaft body (46a) in an axial direction with respect to the rotational center axis (C), and
an outer diameter of the tip portion (46b) is smaller than an outer diameter of the shaft body (46a).

5. The continuously variable transmission according to claim 1 further comprising:
a second bearing (92) disposed on the outer peripheral surface of the tip portion (46b) of the shaft member (46);
the diameter expansion member (101) is disposed on an outer peripheral surface of a tip side of the tip portion of the shaft member (46),
the second bearing (92) is disposed on an outer peripheral surface of a base end side of the tip portion of the shaft member (46), and
an inner diameter of the first bearing (95) is larger than an inner diameter of the second bearing (92).

6. The continuously variable transmission according to claim 5, wherein
the tip portion (46b) includes a first tip portion (46b1) which forms the outer peripheral surface of the tip side and a second tip portion (46b2) which forms the outer peripheral surface on the base end side, and
an outer diameter of the first tip portion (46b1) is smaller than an outer diameter of the second tip portion (46b2).

7. The continuously variable transmission according to claim 5, wherein
an inner diameter of the impregnated bush (102) is larger than the inner diameter of the second bearing (92).

8. The continuously variable transmission according to claim 5, wherein
a positioning member, which positions the diameter expansion member (101) with respect to the second bearing (92), is disposed between the diameter expansion member (101) and the second bearing (92) in an axial direction with respect to the rotational center axis (C).

9. A straddled (1) vehicle comprising:
an engine (14) including a crankshaft (22);
a wheel (5) ; and
a continuously variable transmission (15) according to claim 1.

## Patentansprüche

1. Stufenloses Getriebe (15), das die Antriebskraft von einem Motor (14) auf ein Rad (5) überträgt, umfassend:
eine primäre Riemenscheibe (41), die mit dem Motor (14) verbunden ist;
eine sekundäre Riemenscheibe (42), die mit dem Rad (5) verbunden ist;
einen Riemen (43), der um die primäre Riemenscheibe (41) und die sekundäre Riemenscheibe (42) gewickelt ist;
ein Gehäuse (48), das die primäre Riemenscheibe (41), die sekundäre Riemenscheibe (42) und den Riemen (43) abdeckt; und
eine Stützstruktur (100), die zwischen dem Gehäuse (48) und mindestens einer von der primären Riemenscheibe (41) und der sekundären Riemenscheibe (42) vorgesehen ist;
wobei die Stützstruktur (100) beinhaltet:
ein Wellenelement (46), das eine Drehmittelachse (C) beinhaltet;
ein Durchmessererweiterungselement (101), das an einer Außenumfangsfläche eines Spitzenabschnitts (46b) des Wellenelements (46) angeordnet ist; und
ein erstes Lager (95), das an dem Gehäuse (48) montiert ist und in einem Abstand von dem Durchmessererweiterungselement (101) in einer radialen Richtung in Bezug auf die Drehmittelachse (C) angeordnet ist;
**dadurch gekennzeichnet, dass** es eine imprägnierte Buchse (102) umfasst, die zwischen dem Durchmessererweiterungselement (101) und dem ersten Lager (95) in radialer Richtung angeordnet ist.

2. Stufenloses Getriebe nach Anspruch 1, wobei
das Durchmessererweiterungselement (101) an der Außenumfangsfläche des Spitzenabschnitts (46b) des Wellenelements (46) montiert ist.

3. Stufenloses Getriebe nach Anspruch 1, wobei
die imprägnierte Buchse (102) an einer Innenumfangsfläche des ersten Lagers (95) montiert ist.

4. Stufenloses Getriebe nach Anspruch 1, wobei
das Wellenelement (46) einen Wellenkörper (46a) und den Spitzenabschnitt (46b) beinhaltet, der sich von dem Wellenkörper (46a) in einer axialen Richtung in Bezug auf die Drehmittelachse (C) erstreckt, und
ein Außendurchmesser des Spitzenabschnitts (46b) kleiner als ein Außendurchmesser des Wellenkörpers (46a) ist.

5. Stufenloses Getriebe nach Anspruch 1, des Weiteren umfassend:
ein zweites Lager (92), das an der Außenumfangsfläche des Spitzenabschnitts (46b) des Wellenelements (46) angeordnet ist;
wobei das Durchmessererweiterungselement (101) an einer Außenumfangsfläche einer Spitzenseite des Spitzenabschnitts des Wellenelements (46) angeordnet ist,
das zweite Lager (92) an einer Außenumfangsfläche einer Basisendseite des Spitzenabschnitts des Wellenelements (46) angeordnet ist, und
ein Innendurchmesser des ersten Lagers (95) größer als ein Innendurchmesser des zweiten Lagers (92) ist.

6. Stufenloses Getriebe nach Anspruch 5, wobei
der Spitzenabschnitt (46b) einen ersten Spitzenabschnitt (46b1) beinhaltet, der die Außenumfangsfläche der Spitzenseite bildet, und einen zweiten Spitzenabschnitt (46b2), der die Außenumfangsfläche auf der Basisendseite bildet, und
ein Außendurchmesser des ersten Spitzenabschnitts (46b1) kleiner als ein Außendurchmesser des zweiten Spitzenabschnitts (46b2) ist.

7. Stufenloses Getriebe nach Anspruch 5, wobei
ein Innendurchmesser der imprägnierten Buchse (102) größer als der Innendurchmesser des zweiten Lagers (92) ist.

8. Stufenloses Getriebe nach Anspruch 5, wobei
ein Positionierungselement, das das Durchmessererweiterungselement (101) in Bezug auf das zweite Lager (92) positioniert, zwischen dem Durchmessererweiterungselement (101) und dem zweiten Lager (92) in einer axialen Richtung in Bezug auf die Drehmittelachse (C) angeordnet ist.

9. Grätschsitzfahrzeug (1), umfassend:
einen Motor (14), der eine Kurbelwelle (22) beinhaltet;
ein Rad (5); und
ein stufenloses Getriebe (15) nach Anspruch 1.

## Revendications

1. Transmission à variation continue (15) transmettant la force motrice d'un moteur (14) à une roue (5), comprenant:
une poulie primaire (41) reliée au moteur (14);
une poulie secondaire (42) reliée à la roue (5);
une courroie (43) enroulée autour de la poulie primaire (41) et de la poulie secondaire (42);
un carter (48) recouvrant la poulie primaire (41), la poulie secondaire (42) et la courroie (43); et
une structure de support (100) prévue entre le boîtier (48) et au moins l'une parmi la poulie primaire (41) et la poulie secondaire (42);
la structure de support (100) comprenant:
un élément d'arbre (46) comprenant un axe central de rotation (C);
un élément d'expansion diamétrale (101) disposé sur une surface périphérique extérieure d'une partie d'extrémité (46b) de l'élément d'arbre (46); et
un premier palier (95) monté sur le boîtier (48) et disposé à une certaine distance de l'élément d'expansion diamétrale (101) dans une direction radiale par rapport à l'axe central de rotation (C);
**caractérisé en ce qu'**il comprend une douille imprégnée (102) disposée entre l'élément d'expansion diamétrale (101) et le premier palier (95) dans la direction radiale.

2. Transmission à variation continue selon la revendication 1, dans laquelle l'élément d'expansion diamétrale (101) est monté sur la surface périphérique extérieure de la partie d'extrémité (46b) de l'élément d'arbre (46).

3. Transmission à variation continue selon la revendication 1, dans laquelle la douille imprégnée (102) est montée sur une surface périphérique intérieure du premier palier (95).

4. Transmission à variation continue selon la revendication 1, dans laquelle
l'élément d'arbre (46) comprend un corps d'arbre (46a) et la partie d'extrémité (46b) s'étendant depuis le corps d'arbre (46a) dans une direction axiale par rapport à l'axe central de rotation (C), et
le diamètre extérieur de la partie d'extrémité (46b) est inférieur au diamètre extérieur du corps d'arbre (46a).

5. Transmission à variation continue selon la revendication 1 comprenant en outre:
un second palier (92) disposé sur la surface périphérique extérieure de la partie d'extrémité (46b) de l'élément d'arbre (46);
l'élément d'expansion de diamètre (101) est disposé sur une surface périphérique extérieure d'un côté d'extrémité de la partie d'extrémité de l'élément d'arbre (46),
le second palier (92) est disposé sur une surface périphérique extérieure d'un côté d'extrémité de base de la partie d'extrémité de l'élément d'arbre (46), et
le diamètre intérieur du premier palier (95) est supérieur au diamètre intérieur du deuxième palier (92).

6. Transmission à variation continue selon la revendication 5, dans laquelle
la partie d'extrémité (46b) comprend une première partie d'extrémité (46b1) qui forme la surface périphérique extérieure du côté de l'extrémité et une deuxième partie d'extrémité (46b2) qui forme la surface périphérique extérieure du côté de l'extrémité de base, et
le diamètre extérieur de la première partie d'extrémité (46b1) est inférieur au diamètre extérieur de la deuxième partie d'extrémité (46b2).

7. Transmission à variation continue selon la revendication 5, dans laquelle
le diamètre intérieur de la douille imprégnée (102) est plus grand que le diamètre intérieur du second palier (92).

8. Transmission à variation continue selon la revendication 5, dans laquelle
un élément de positionnement, qui positionne l'élément d'expansion diamétrale (101) par rapport au second palier (92), est disposé entre l'élément d'expansion diamétrale (101) et le second palier (92) dans une direction axiale par rapport à l'axe central de rotation (C).

9. Véhicule à deux roues (1) comprenant :
un moteur (14) comprenant un vilebrequin (22);
une roue (5); et
une transmission à variation continue (15) selon la revendication 1.
